# EUROPÄISCHE PATENTSCHRIFT

(11) **EP 1 154 239 B1**
(45) Veröffentlichungstag und Bekanntmachung des Hinweises auf die Patenterteilung: **30.09.2009**
(21) Anmeldenummer: 01111497.2
(22) Anmeldetag: 11.05.2001
(51) Int. Cl.: G01D 5/14

(54) **Drehwinkelsensor**
Angular position sensor
Capteur de la position angulaire

(30) Priorität: 13.05.2000 DE 20008663 U; 10.01.2001 DE 10116459
(43) Veröffentlichungstag der Anmeldung: 14.11.2001
(73) Patentinhaber: Apel, Peter, 59394 Südkirchen (DE)
(72) Erfinder: Apel, Peter, 59394 Südkirchen (DE)
(74) Vertreter: Hoffmeister, Helmut

(56) Entgegenhaltungen:
- EP-A- 0 964 137
- DE-A- 19 630 764
- DE-A- 19 944 019
- DE-U- 29 901 516
- US-A- 5 332 965

## Beschreibung

Die Erfindung betrifft einen Drehwinkelsensor gemäß dem Oberbegriff des Patentanspruches 1.

Ein Drehwinkelsensor ist aus der WO 95 14 911 A1 bekannt. Er besteht aus einer stationären und einer rotierenden Formation. Die stationäre Formation enthält zwei halbmondförmige Statorelemente, zwischen denen sich eine Abstandsausnehmung befindet, in der ein Hallelement angeordnet ist. Die rotierende Formation weist ein ringförmig ausgebildetes Magnetelement auf, das von einer Halteeinheit gehalten wird und unter Belassung eines Luftspalts um die Statorelemente bewegbar ist.

Als gattungsbildend wird ein steckbarer Drosselklappendrehwinkelsensor betrachtet, der aus der DE 299 01 516 U1 bekannt ist. Bei dem bekannten Drehwinkelsensor ist der Bewegungsmechanismus ausgehend vom Wellenelement sehr kompliziert angeordnet und damit schwierig zu montieren.

Es stellt sich die Aufgabe, den Aufbau des Drehwinkelsensors und seine Montage zu vereinfachen, indem der Stator mit den beabstandeten Statorsegmenten und eingesetztem Hall-Element als montagegünstiges Element ausgestattet werden.

Erfindungsgemäß wird diese Aufgabe durch die Merkmale des Anspruchs 1 gelöst.

Durch die in den Unteransprüchen aufgeführten Maßnahmen sind vorteilhafte Weiterbildungen der Erfindung und Verbesserungen der im Anspruch 1 angegebenen Vorrichtung möglich.

Ein Ausführungsbeispiel der Erfindung, anhand dessen deren Vorteile mit erläutert werden, ist in der Zeichnung dargestellt und wird im folgenden näher beschrieben. Es zeigen in schematischer Darstellung:
- Fig. 1: einen Drehwinkelsensor in einem eingebauten Zustand in einer schematischen, perspektivischen Teildarstellung,
- Fig. 2: einen Drehwinkelsensor gemäß Figur 1 in einer auseinandergezogenen schematischen, perspektivischen Teildarstellung von oben gesehen,
- Fig. 3: einen Drehwinkelsensor gemäß Figur 1 in einer auseinandergezogenen schematischen, perspektivischen Teildarstellung von der Seite gesehen,
- Fig. 4: einen Schnitt durch einen Drehwinkelsensor gemäß Figur 5 in einer schematischen Darstellung gemäß der gewinkelten Schnittlinie IV ... IV in Fig. 5, und
- Fig. 5: eine Draufsicht auf einen Drehwinkelsensor gemäß Figur 1 in einer schematischen Darstellung.

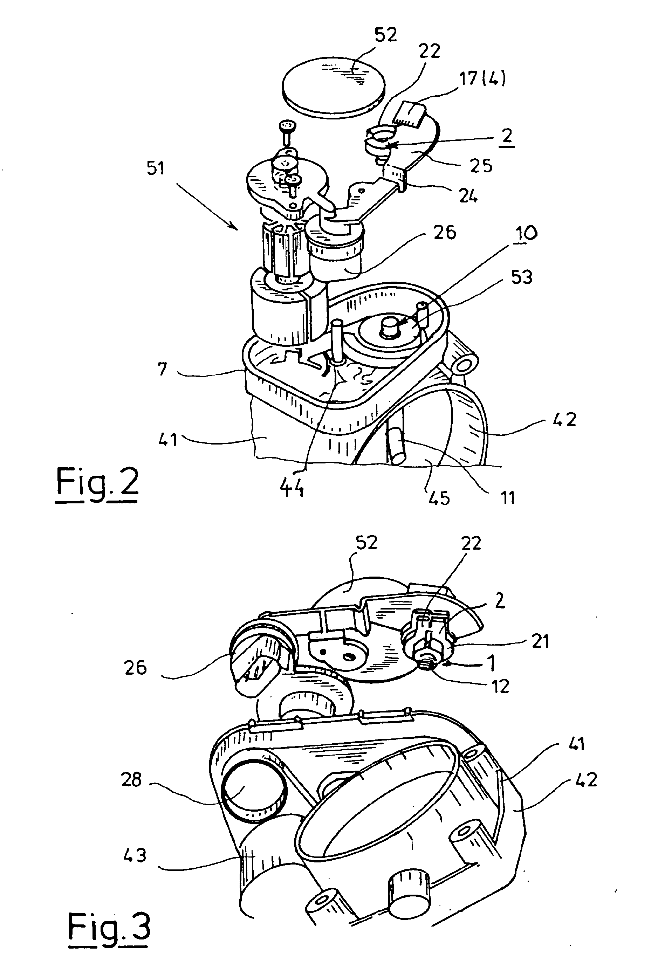

Wie die Figur 3 zeigt, weist ein Drehwinkelsensor einen Rotor 1 und einen Stator 2 auf.

Der Stator 2 besteht gemäß den Figuren 2,3 und 5 aus einem Statorsegment 21 und einem Statorsegment 22. Beide Statorsegmente sind kneifzangenförmig ausgebildet. Hervorzuheben ist, daß sie keine scharfen Kanten aufweisen.

Zwischen den beiden Statorsegmenten 21 und 22 befinden sich zwei Abstandsausnehmungen 9.1, 9.2, wobei in der breiteren Abstandsausnehmung 9.1 eine oder zwei Hall-Einheiten 4 angeordnet sind. Die Hall-Einheit kann als Hall-Element oder Hall-IC-Schaltkreis ausgebildet sein.

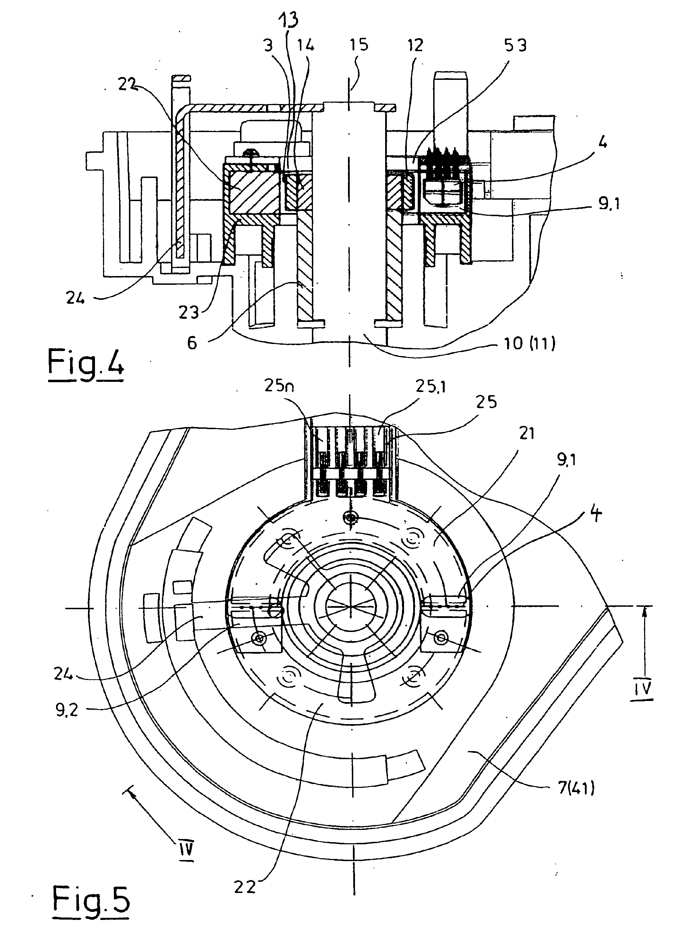

Die Statorsegmente 21, 22 mit eingesetzter Hall-Einheit 4 werden von einer Statorhalteeinheit 23 gehalten, die im rechten Winkel zu einer Rotationsachse 15 angeordnet ist (vgl. Figur 4). Die Statorhalteeinheit 23 besitzt ein Halteprofil 24, in das ein Stanzgitter 25 eingeformt ist. Mit dem Stanzgitter 25 verbunden ist eine Leiterplatte, die als IC-Schaltkreis 17 ausgebildet ist, die Bauelemente oder dgl. und die Hall-Einheit(en) 4 aufweist.

Das Stanzgitter 25 besteht aus nebeneinander liegenden Gitterschienen 25.1 - 25.n (vgl. Fig. 5). Auf den Schienen können Bauelemente angeordnet sein.

Am anderen Ende, den Statorsegmenten 21, 22 im wesentlichen gegenüberliegend, ist an der Statorhalteeinheit 23 eine Steckereinheit 26 und eine Antriebseinheit 51 angeordnet. Das Stanzgitter 25 verbindet, wie die Figuren 2 und 3 zeigen, den IC-Schaltkreis 17 mit der(n) Hall-Einheit(en) 4 und die Steckereinheit 26.

Die Antriebseinheit 51 weist einen Elektromotor mit Kohlebürsten und einer Motorwelle auf. Diese Kohlebürsten werden ebenfalls lagegerecht von der Statorhalteeinheit 23 gehalten.

Der Rotor 1 weist ein Ringmagnetelement 13 auf, das an einer Achse auf einer Seite eine Nord-Süd-Polung N S und auf einer gegenüberliegenden Seite eine Süd-Nord-Polung S N aufweist. Hierdurch entstehen quasi zwei sich gegenüberliegende Magnetsegmente. Die besondere Polung der beiden Magnetsegmente sichert, dass der magnetische Fluss einen geraden Verlauf hat.

Wie insbesondere Figur 2 zeigt, ragt in einen Gehäusekörper 7 ein Wellenelement 10, das von einem Achsenhaltekörper 6 umgeben ist. Der Achsenhaltekörper 6 ist mit einem Boden des Gehäusekörpers 7 verbunden.

An dem Wellenelement 10 ist ein Magnethalteelement 14 angeordnet, das ein Ringmagnetelement 13 oder ein Magnetsegment hält. Das Magnethalteelement 14 besteht aus einem magnetisch nicht leitendem Material.

Der Gehäusekörper 7 ist auf einem Drosselklappengehäuse 41 angeordnet. In den Boden des Gehäusekörpers 7 ist eine Steckerausnehmung 28 eingebracht. Am Boden des Gehäusekörpers 7 ist ein zum Gehäusekörper 7 hin offenes Antriebsgehäuse 43 angeordnet.

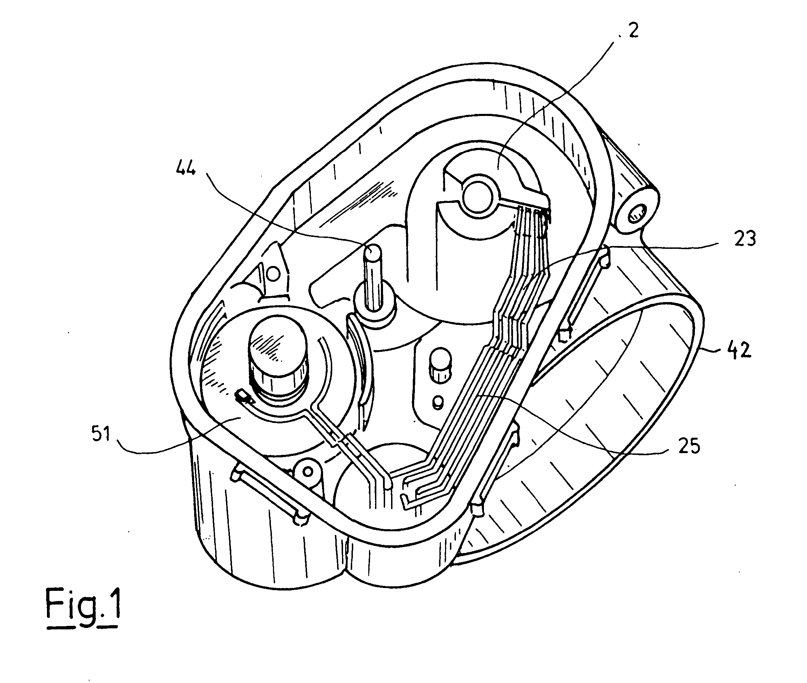

Aus dem Gehäusekörper 7 ragt ein Stift 44, auf dem sich ein Deckel abstützen kann, mit dem sich der Gehäusekörper 7 verschließen läßt (vergleiche Figur 1).

Im wesentlichen rechtwinklig zum Gehäusekörper 7 weist das Drosselklappengehäuse 41 eine Drosselklappenausnehmung 42 auf, in der drehbeweglich mit einer Drosselklappenwelle 11 verbunden eine Drosselklappe angeordnet ist. Die Drosselklappenwelle geht in das Wellenelement 10 über.

Die Antriebseinheit 51 ist mit der Drosselklappenwelle durch eine Getriebeeinheit verbunden, von der wenigstens Zahnräder 52, 53 zu sehen sind. Das Zahnrad 53 ist bereits auf das Wellenelement 10 aufgesetzt, während das Zahnrad 52 später auf den Stift 44 gesteckt wird und mit einem Zahnrad der Antriebseinheit 51 zusammenarbeitet.

Erfindungswesentlich ist,
- dass mit der Statorhalteeinheit 23 der Stator 2 mit den beabstandeten Statorsegmenten 21, 22 und bereits eingesetzter Hall-Einheit 4, die Steckereinheit 26, das Stanzgitter 25, das Halteprofil 24 als Montagehilfe, die Antriebseinheit 51 und gegebenenfalls deren Kohlebürsten bzw. deren Motorwelle und ein Teil der Getriebeeinheit montagegerecht gehalten werden und
- daß der Rotor 2 mit dem Ringmagnetelement 13 und das Zahnrad 53 als Teil der Getriebeeinheit an der Drosselklappenwelle 11 montagegerecht angeordnet sind.

Wird der Drehwinkelsensor montiert, wird auf das in den Gehäusekörper 7 ragende Drosselklappenwelle das Ringmagnetelement 13 und danach die Statorhalteeinheit 23 in den Gehäusekörper 7 eingesetzt. Das Halteprofil 24 sichert und erleichtert die Positionierung der Statorhalteeinheit 23 so, daß die beabstandeten Statorsegmente 21, 22 unter Belassung des Luftspaltes 3 gegenüber dem Ringmagnetelement 13 positioniert werden, die Steckereinheit in die Steckerausnehmung 28 und die Antriebseinheit 51 in das Antriebsgehäuse 43 eingesetzt werden. Die auf dem IC-Schaltkreis angeordnete(n) Hall-Einheit(en) 4 ist (sind) justiert in der Abstandsausnehmung 9.2 eingesetzt und bereits mit der Steckereinheit verbunden. Der Motor der Antriebseinheit kann mit lagegerecht einjustierten Kohlebürsten und Motorwelle installiert werden.

Abschließend wird das Zahnrad 52 auf den Stift 44 gesteckt, so daß auch die Antriebseinheit komplett ist. Auf den Gehäusekörper mit dem eingebauten Drehwinkelsensor wird, wie in Figur 1 gezeigt, ein Deckel aufgesetzt und der Gehäusekörper 7 verschlossen.

Der beschriebene Drehwinkelsensor kann mit seinen Teilen an anderer Stelle wie die Drosselklappeneinheit hergestellt und montiert werden. Der Drehwinkelsensor kann in großen Stückzahlen vorgefertigt werden. Besondere Justierungen bei der Montage sind nicht erforderlich, da die Justierungen Teil der Vorfertigung sind. Hierdurch vereinfacht sich die Endmontage und die Kosten reduzieren sich ganz wesentlich.

## Patentansprüche

1. Drehwinkelsensor
- mit einem Gehäusekörper (7),
- mit einem Wellenelement (10), das in den Gehäusekörper (7) hineinragt
- mit zwei Statorsegmenten (21,22), die unter Belassung einer Abstandsausnehmung (9.1, 9.2) zueinander angeordnet sind,
- mit wenigstens einer Hall-Einheit (4), die in einer der Abstandsausnehmungen (9.1, 9.2) angeordnet ist,
- mit einem Ringmagnetelement (13), das von dem Wellenelement (10) getragen ist und unter Belassung eines Luftspaltes (3) um eine Rotationsachse (15) mit dem Wellenelement (10) gegenüber den Statorelementen zu bewegen ist,
**dadurch gekennzeichnet, dass** eine Statorhalteeinheit (23) vorhanden ist, die rechtwinklig zur Rotationsachse (15) des Wellenelements (10) angeordnet ist und die die zwei Statorsegmente (21,22) hält, wobei an der Statorhalteeinheit (23) eine Antriebseinheit (51) und eine mit der Hall-Einheit (4) verbundene Steckereinheit (26) angeordnet ist.

2. Drehwinkelsensor nach Anspruch 1, **dadurch gekennzeichnet, dass** die Statorhalteeinheit (23) ein Halteprofil (24) aufweist, mit dem die Statorhalteeinheit (23) wenigstens teilweise im Gehäusekörper (7) festgelegt ist.

3. Drehwinkelsensor nach Anspruch 1 oder 2, **dadurch gekennzeichnet, dass** die Statorhalteeinheit (23) aus Kunststoff besteht, in den wenigstens teilweise Gitterschienen (25.1 ,..., 25.n) eines Stanzgitters (25) eingeformt sind.

4. Drehwinkelsensor nach Anspruch 1, **dadurch gekennzeichnet, dass** das Wellenelement (10) in eine Drosselklappenwelle (11) übergeht, dass die Antriebseinheit (51) mit der Drosselklappenwelle (11) durch ein Getriebe verbunden ist und dass die Antriebseinheit (51) einen Motor mit Kohlebürsten und einer Motorwelle aufweist.

5. Drehwinkelsensor nach Anspruch 4, **dadurch gekennzeichnet, dass** die Kohlebürsten von der Statorhalteeinheit (23) gehalten sind.

6. Drehwinkelsensor nach Anspruch 4, **dadurch gekennzeichnet, dass** die Motorwelle von der Statorhalteeinheit (23) gehalten ist.

7. Drehwinkelsensor nach Anspruch 4, **dadurch gekennzeichnet, dass** der Gehäusekörper (7) auf einem Drosselklappengehäuse (41) angeordnet ist, in dem drehbar eine Drosselklappe (45) an der Drosselklappenwelle (11) gehalten ist, die als Wellenelement (10) in den Gehäusekörper (7) hineinragt.

8. Drehwinkelsensor nach Anspruch 7, **dadurch gekennzeichnet, dass** an dem Gehäusekörper (7) ein Antriebsgehäuse (43) angeordnet ist.

9. Drehwinkelsensor nach Anspruch 8, **dadurch gekennzeichnet, dass** die Drosselklappenwelle (11) mit einem am Gehäusekörper (7) angeordneten Achsenhaltekörper (6) gegenüber wenigstens einem Statorsegment (21, 22) geführt ist.

10. Drehwinkelsensor nach einem der Ansprüche 1 bis 9, **dadurch gekennzeichnet, dass** im Gehäusekörper (7) eine Steckerausnehmung (28) eingebracht ist, in die die Steckereinheit (26) einzusetzen ist.

## Claims

1. Rotation angle sensor
- having a housing body (7),
- having a shaft element (10) which protrudes into the housing body (7)
- having two stator segments (21, 22) which are disposed with respect to each other so as to leave a spacing aperture (9.1, 9.2),
- having at least one Hall unit (4) which is disposed in one of the spacing apertures (9.1,9.2),
- having an annular magnet element (13) which is supported by the shaft element (10) and is to be moved about an axis of rotation (15) with the shaft element (10) and with respect to the stator elements while leaving an air gap (3),
**characterised in that** a stator holding unit (23) is provided which is disposed at a right angle to the axis of rotation (15) of the shaft element (10) and which holds the two stator segments (21, 22), wherein on the stator holding unit (23) a drive unit (51) and a plug unit (26) connected to the Hall unit (4) are disposed.

2. Rotation angle sensor as claimed in claim 1, **characterised in that** the stator holding unit (23) has a holding profile (24) with which the stator holding unit (23) is at least partially fixed in the housing body (7).

3. Rotation angle sensor as claimed in claim 1 or 2, **characterised in that** the stator holding unit (23) consists of synthetic material into which grating rails (25.1, ..., 25.n) of a stamped grating (25) are at least partially integrally formed.

4. Rotation angle sensor as claimed in claim 1, **characterised in that** the shaft element (10) merges into a throttle valve shaft (11), that the drive unit (51) is connected to the throttle valve shaft (11) by a transmission and that the drive unit (51) has a motor with carbon brushes and a motor shaft.

5. Rotation angle sensor as claimed in claim 4, **characterised in that** the carbon brushes are held by the stator holding unit (23).

6. Rotation angle sensor as claimed in claim 4, **characterised in that** the motor shaft is held by the stator holding unit (23).

7. Rotation angle sensor as claimed in claim 4, **characterised in that** the housing body (7) is disposed on a throttle valve housing (41) in which a throttle valve (45) is rotatably held on the throttle valve shaft (11) which protrudes as the shaft element (10) into the housing body (7).

8. Rotation angle sensor as claimed in claim 7, **characterised in that** a drive housing (43) is disposed on the housing body (7).

9. Rotation angle sensor as claimed in claim 8, **characterised in that** the throttle valve shaft (11) is guided with an axle holding body (6), which is disposed on the housing body (7), with respect to at least one stator segment (21, 22).

10. Rotation angle sensor as claimed in any one of claims 1 to 9, **characterised in that** in the housing body (7) a plug aperture (28) is provided into which the plug unit (26) is to be inserted.

## Revendications

1. Capteur de position angulaire comprenant
un corps (7) de boîtier,
un élément d'arbre (10) qui fait saillie dans le corps (7) de boîtier,
deux segments (21, 22) de stator qui sont disposés l'un par rapport à l'autre de manière à ménager un évidement d'espacement (9.1, 9.2),
au moins une unité de Hall (4) qui est disposée dans l'un des évidements d'espacement (9.1, 9.2),
un élément magnétique annulaire (13) qui est porté par l'élément d'arbre (10) et peut être déplacé avec l'élément d'arbre (10) autour d'un axe de rotation (15) par rapport aux éléments de stator en ménageant un entrefer (3),
**caractérisé en ce qu'**il comprend une unité de support (23) de stator qui est disposée à angles droits par rapport à l'axe de rotation (15) de l'élément d'arbre (10) et supporte les deux segments (21, 22) de stator, et sur laquelle sont disposées une unité d'entraînement (51) et une unité de fiche mâle (26) connectée à l'unité de Hall (4).

2. Capteur de position angulaire selon la revendication 1, **caractérisé en ce que** l'unité de support (23) de stator présente un profil (24) de stator au moyen duquel l'unité de support (23) de stator est fixée au moins partiellement dans le corps (7) de boîtier.

3. Capteur de position angulaire selon la revendication 1 ou 2, **caractérisé en ce que** l'unité de support (23) de stator consiste en une matière plastique dans laquelle des rails (25.1, ..., 25.n) de grille d'une grille estampée (25) sont au moins partiellement formés par moulage.

4. Capteur de position angulaire selon la revendication 1, **caractérisé en ce que** l'élément d'arbre (10) se raccorde dans un arbre (11) de volet de réglage, **en ce que** l'unité d'entraînement (51) est connectée à l'arbre (11) de volet de réglage par un mécanisme, et **en ce que** l'unité d'entraînement (51) comprend un moteur à balais de graphite et un arbre de moteur.

5. Capteur de position angulaire selon la revendication 4, **caractérisé en ce que** les balais de graphite sont supportés par l'unité de support (23) de stator.

6. Capteur de position angulaire selon la revendication 4, **caractérisé en ce que** l'arbre de moteur est supporté par l'unité de support (23) de stator.

7. Capteur de position angulaire selon la revendication 4, **caractérisé en ce que** le corps (7) de boîtier est disposé sur un boîtier (41) de volet de réglage dans lequel un volet de réglage (45) est supporté par l'arbre (11) de volet de réglage qui fait saillie dans le corps (7) de boîtier en tant qu'élément d'arbre (10).

8. Capteur de position angulaire selon la revendication 7, **caractérisé en ce qu'**un boîtier d'entraînement (43) est disposé sur le corps (7) de boîtier.

9. Capteur de position angulaire selon la revendication 8, **caractérisé en ce que** l'arbre (11) de volet de réglage est guidé, par rapport à au moins un segment (21, 22) de stator, au moyen d'un corps de support (6) d'axe disposé sur le corps (7) de boîtier.

10. Capteur de position angulaire selon l'une quelconque des revendications précédentes **caractérisé en ce qu'**un évidement (28) de fiche mâle y est ménagé afin que l'unité (26) de fiche mâle y soit insérée.
